# EUROPEAN PATENT APPLICATION

(11) **EP 4 316 709 A1**
(43) Date of publication of application: **07.02.2024**
(21) Application number: 23025004.5
(22) Date of filing: 19.07.2023
(51) Int. Cl.: B23B 29/12, B23D 5/00, B23D 79/00

(54) **HIGH FREQUENCY MACHINING METHOD AND DEVICE**

(30) Priority: 02.08.2022 IT 202200016371
(71) Applicant: C.M.S. S.p.A., 24019 Zogno (BG) (IT)
(72) Inventor: Colleoni, Marco Innocente, 24019 Zogno (BG) (IT)
(74) Representative: Luppi Intellectual Property S.r.l.

(57) **Abstract**

A high-frequency machining method and device are disclosed, in which, during the machining, vibration of a tool at a vibration frequency above 10 kHz is activated and simultaneously also a relative feed motion along a machining path between the tool and the workpiece and a relative oscillation motion between the tool and the workpiece along an oscillation direction are activated, coinciding with a direction of penetration of the tool into a thickness of the workpiece, with an oscillation frequency below 10 kHz.

## Description

### Background of the invention

The invention relates to a high-frequency machining method and device, in particular for a cutting machining task.

Specifically but not exclusively, the invention can be applied to machining on a honeycomb structure (for example in the form of a beehive) and/or for machining on a panel, in particular on a panel with a honeycomb structure (for example in the form of a beehive), for example on an aluminium panel.

In particular, reference is made to a high-frequency machining method according to the preamble of the first claim. Such a method is known, for example, from patent publication US 2017/0100781 A1.

In the sector of high-frequency machining, one of the drawbacks of the prior art consists of the risk of damaging the tool and/or the workpiece being machined, especially in the case of high-frequency machining on a honeycomb structure, for example a cutting machining task on an aluminium honeycomb structure, in which during the machining the tool could deform one or more cells of the structure, damaging the product and/or causing the tool to deteriorate.

The risk of incorrect machining is even greater if the tool operates on a machining axis that is tilted with respect to the surface of the workpiece being machined, as, for example, in a cutting machining task involving cutting a panel with a cutting plane that is tilted with respect to the plane of the panel.

Another limit of the prior art is found in the fact that the entire available operating portion of the tool (for example, the entire cutting blade portion of a cutting tool) is not always fully exploited, which can result in localized wear to the tool with a consequent shortening of the working life thereof.

### Summary of the invention

One object of this invention is to overcome one or more of the aforesaid limits and drawbacks of the prior art.

One object is to propose a high-frequency machining method and device that are alternative to those of the prior art.

One advantage is reducing the risk of damaging the high-frequency tool and/or the workpiece being machined even if the tool operates on a machining axis that is tilted with respect to the surface of the workpiece being machined.

One advantage is permitting high-frequency machining on a honeycomb structure without deforming the cells of the structure.

One advantage is to provide a method and a device that are suitable for performing a cutting machining task on an aluminium honeycomb structure.

One advantage is to permit exploitation of the entire available operating portion of a high-frequency tool.

One advantage is to make available a high-frequency machining device that is constructionally simple and cheap.

Such object and advantages, and also others, are achieved by a method and/or device according to one or more of the claims set out below.

In one example, a high-frequency machining method involves, during machining, simultaneously activating relative vibration between a workpiece and a tool at a vibration frequency above 10 kHz, a relative feed motion along a machining path between the tool and the workpiece, and a relative oscillation motion between the tool and workpiece along a direction of penetration of the tool into a thickness of the workpiece at an oscillation frequency below 10 kHz.

Machining can comprise, in particular, a high-frequency cutting machining task applied to a honeycomb structure.

### Short description of the drawings

The invention can be better understood and implemented with reference to the appended drawings that illustrate embodiments by way of non-limiting examples, in which:

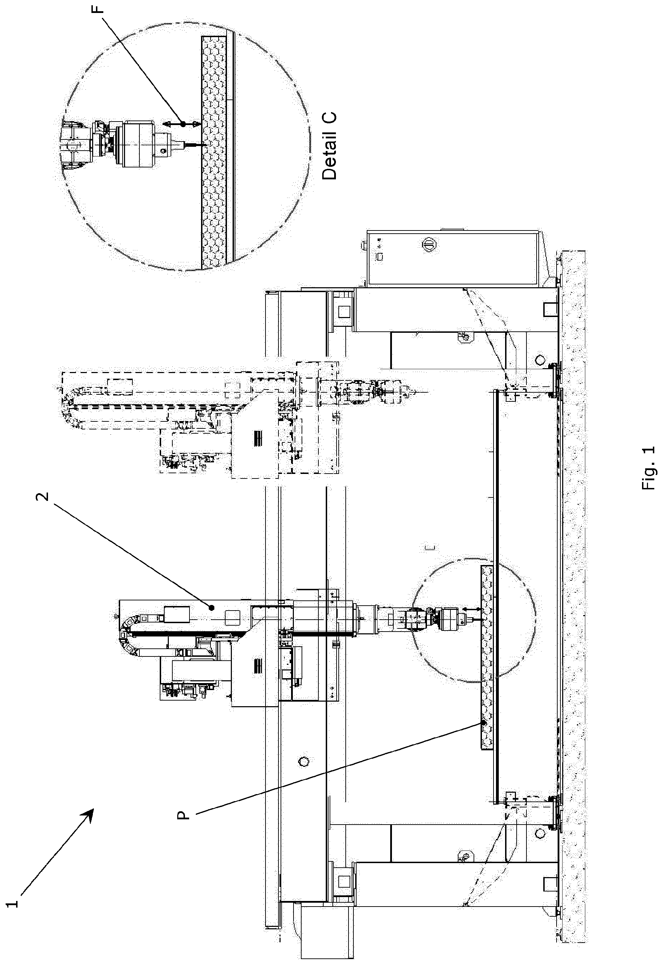

Figure 1 shows a vertical raised view of an embodiment of a high-frequency machining device according to the invention;
Figure 2 illustrates, in a vertical elevation, two positions adopted by the tool used by the machining device of Figure 1;
Figures 3 and 4 are two perspective views that show the two positions of the tool illustrated in Figure 2.

### Detailed description

With reference to the aforesaid figures, a high-frequency machining device has been indicated overall by 1, in particular to perform material removal from a workpiece P, for example a cutting machining task, in particular on a panel, as in this specific embodiment. The machining device 1 can be used, in particular, for performing a machining task on a honeycomb structure (for example in the form of a beehive). The machining device 1 can be used, in particular, for performing a machining task on a panel, in particular to perform a cutting machining task on a panel with a honeycomb structure (for example in the form of a beehive) of aluminium. In the specific embodiment, machining comprises a cut on a workpiece P with a honeycomb structure along a closed loop cutting line with an oblique blade so as to make an opening A of frustoconical shape on the workpiece P.

The machining device 1 may comprise, in particular, a machining head 2 of a numerically controlled machining centre. The machining centre may comprise, in particular, a numeric control with six machining axes, for example three linear controlled axes X, Y, Z and three controlled rotation axes. The machining centre may comprise, in particular, a centre of movable portal type.

The machining device 1 may comprise, in particular, a machining tool 3 carried by the machining head 2. The machining tool 3 may comprise, in particular, a cutting tool with a blade (for example triangular). The blade can be arranged oriented with a desired lateral tilt with respect to a horizontal plane (for example, with respect to a flat surface of the panel) to perform an oblique cut. The blade may comprise, as in this embodiment, a cutting blade arranged tilted frontally with respect to a direction of an advancement movement of the cutting blade along a machining path, where the machining path in this case is the path that permits material removal along a cutting line.

In this embodiment, as said, the cutting blade does not only have a lateral tilt, being arranged on an oblique cut plane with respect to the horizontal flat surface of the workpiece P, but also has a frontal tilt, being arranged obliquely to the advancement direction of the blade (in this embodiment, the cutting blade is arranged on a triangular blade).

The machining device 1 may comprise, in particular, vibrating means 4 carried by the machining head 2 and configured to induce a vibration on the tool at a vibration frequency above 10 kHz to perform the machining. The vibrating means 4 may comprise, in particular, ultrasound means (for example ultrasound means of known type). The vibration frequency can be, in particular, greater than 15 kHz, or greater than 20 kHz. In this embodiment, in which the machining tool 3 comprises a cutting blade, the vibration of the blade comprises movements (at high frequency and limited width) in a vibration direction parallel to an (oblique) cutting plane on which the blade lies, although in other embodiments, it is possible to provide a vibration direction that is transverse (for example, orthogonal) to the lying cutting plane of the blade, or a vibration with a complex motion or a motion obtained from a combination of several motions, etc.

The numeric control of the machining device 1 is configured to provide the machining tool 3 with a feed or machining motion with respect to the workpiece P along a machining path. The machining path may comprise a relative movement between the machining tool 3 and the workpiece P suitable and/or necessary for performing the machining. The machining path may comprise, in particular, the advancement movement along the machining path to permit material removal along a cutting line. In this case, in which the high-frequency machining tool 3 comprises a cutting tool, the cutting movement with which the tool performs the cut in a single zone of the workpiece is provided by the high-frequency vibration, whereas the possibility of actually performing the cut along the machining path is achieved owing to the advancement movement along the cutting line, i.e. in a direction substantially horizontal to the flat surface of the panel being machined, which constitutes the main machining movement.

The machining path could comprise, in addition to a main machining movement, also one or more secondary machining movements like, for example, an adjusting movement with which a relative position is adjusted between the workpiece P and the machining tool 3, in particular to determine the depth with which the machining tool 3 penetrates the workpiece P (possible pass depth), or an initial adjustment movement to determine the position of the machining tool 3 with respect to the workpiece P being machined before machining starts or machining resumes after a pass, or the movement of the machining tool 3 towards or away from the workpiece P in certain machining tasks with a cyclically repeated path like, for example, slotting or toothing.

The numeric control of the machining device 1 is configured, in addition to providing the machining tool 3 with the feed motion along the machining path, also to provide the machining tool 3 with a further oscillation motion along a direction of penetration F of the tool in a thickness of the workpiece and with an oscillation frequency below 10 kHz. The direction of penetration F with oscillation motion may comprise, as in this specific embodiment, a direction that is oblique to the flat surface of the workpiece P being machined and/or a direction parallel to the plane lying of the blade and/or a direction parallel to or coaxial with the axis of the tool holder (for example a tool-holding spindle) that carries the machining tool 3. The oscillation frequency in the direction of penetration F is less than the vibration frequency. The oscillation frequency can be, for example, less than 1 kHz, or less than 100 Hz, or less than 10 Hz. The oscillation frequency can be, for example, a value comprised in a range between 0.2 Hz and 10 Hz. The oscillation frequency can be chosen, in particular, on the basis of an oscillation width of the machining tool 3 (for example measured along the direction of penetration F). The oscillation width can be chosen, in particular, on the basis of a thickness of the workpiece P and/or on the basis of a tilt of the machining tool 3.

It has been ascertained that also this oscillation motion in the direction of penetration F (which is added to the vibration motion and to the overall machining or feed motion along the machining path, including the main machining movements and the secondary machining movements) at an oscillation frequency below vibration frequency, enables the risk of damaging the high-frequency machining tool 3 and/or the workpiece P being machined to be considerably reduced, especially when the high-frequency machining (for example a cut) is performed on a honeycomb structure (for example made of aluminium), in which case the drawback of deforming the cells of the structure during the machining is drastically reduced or almost eliminated.

Further, it has been ascertained that this further oscillation motion in the direction of penetration F enables damage to the high-frequency machining tool 3 and/or to the workpiece P being machined to be reduced or eliminated, even if the tool operates on a machining axis that is tilted with respect to the surface of the workpiece being machined.

It has also been ascertained that this further oscillation motion facilitates effective exploitation of the entire available operating portion of the high-frequency machining tool 3, in particular of the cutting blade of a blade operating at high frequency.

The machining device 1 enables a high-frequency machining method to be actuated comprising the step of performing a machining task on a workpiece P by a machining tool 3 with a relative vibration between workpiece and tool at a vibration frequency above 10 kHz, or greater than 15 kHz, or greater than 20 kHz.

The machining method comprises the step of providing a relative feed motion between the machining tool 3 and the workpiece P during the machining along a machining path. The machining method further comprises the step of providing, during the machining, an additional relative oscillation motion between the machining tool 3 and the workpiece P along a direction of penetration F of the tool in a thickness of the workpiece.

This additional oscillation motion along the direction of penetration F can be actuated (by a controlled movement by the numeric control of the machining head 2) at an oscillation frequency below 10 kHz, or less than 1 kHz, or less than 100 Hz, or less than 10 Hz. In particular, the oscillation frequency can be comprised in the 0.2 Hz to 10 Hz range. The oscillation frequency can depend, in particular, on the oscillation width that in turn can depend on the thickness of the workpiece and/or on the tilt of the cut.

As said, the relative vibration between the workpiece P and the machining tool 3 can be made by ultrasound. The machining tool 3 may comprise a cutting blade and machining may comprise cutting the workpiece P.

In particular, the machining path may comprise a cutting path parallel to a flat surface of the workpiece P, for example a closed loop cutting path to make an opening A on a panel.

The relative motion between the machining tool 3 and the workpiece P obtained from the combination of the aforesaid feed motion and of the aforesaid oscillation motion can define, as in this specific embodiment, one or more path portions arranged in the thickness of the workpiece and obliquely to a flat surface of the workpiece.

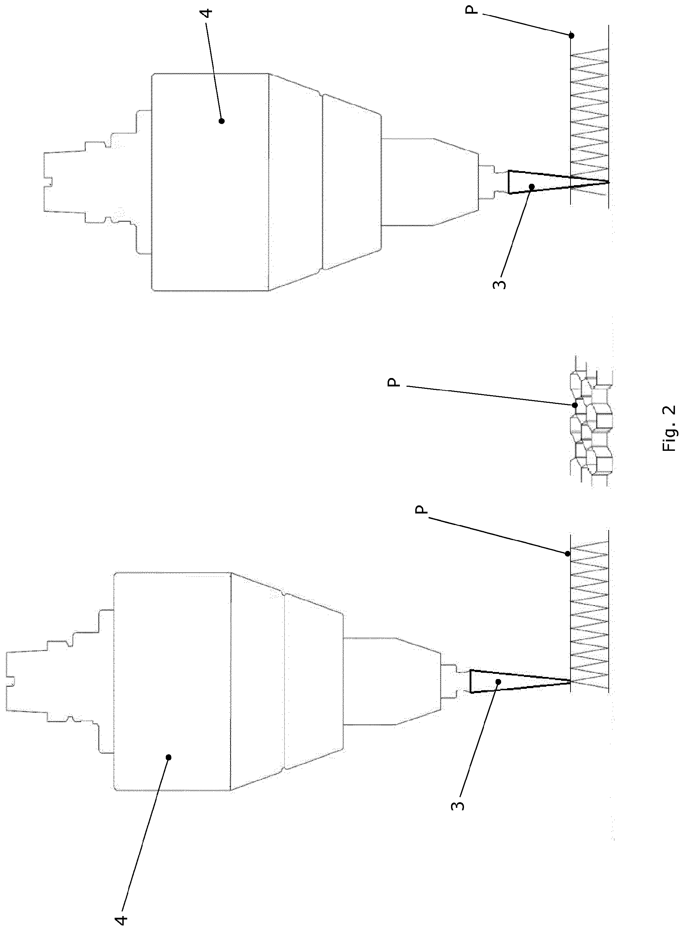

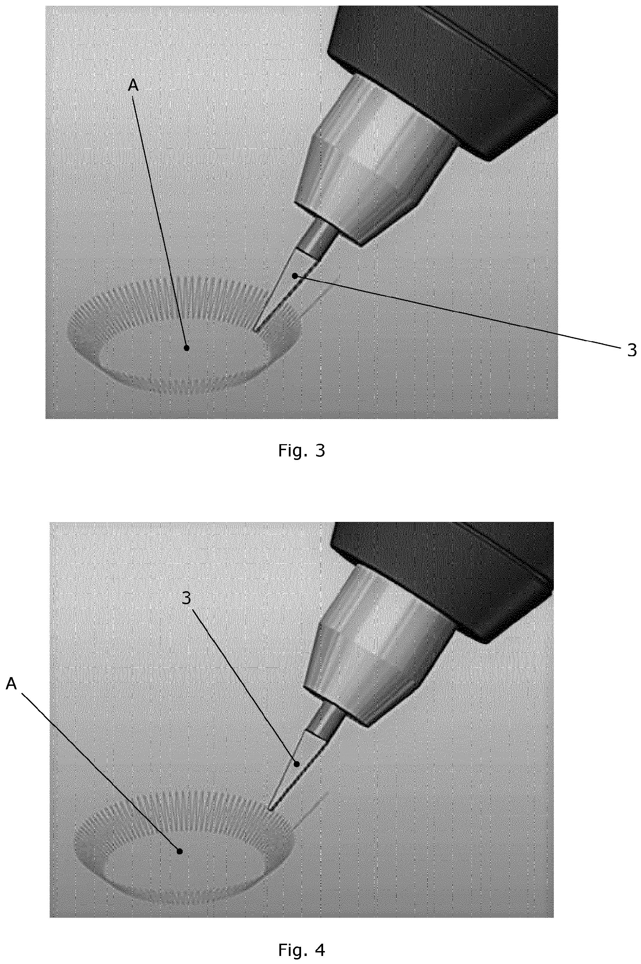

In particular, the relative motion between the tool and the workpiece obtained from the aforesaid combination of the feed motion and of the oscillation motion can define a zig-zag path in the thickness of the workpiece, as shown in Figures 2-4.

As said, the workpiece P may comprise at least one flat surface being machined, in particular a flat surface of a panel with a honeycomb structure (for example in the form of a beehive) made of aluminium. The direction of penetration F with oscillating motion can be oblique with respect to the flat surface of the workpiece P (for example, as in this case, to make an opening A on a panel of frustoconical shape).

The machining tool 3 (in particular, the cutting blade) may comprise at least one machining axis (for example, the axis of a tool-holding spindle) and the direction of penetration F with oscillating motion can be parallel to or coaxial with the machining axis of the tool. The relative vibration between the workpiece P and the machining tool 3 comprises, in this specific embodiment, a vibration of the tool in a vibration direction parallel to or coaxial with the machining axis of the tool, although it is possible to provide other vibration directions, also with combined or complex motions.

It has been seen that the machining tool 3 can be carried by a machining head 2 of a numerically controlled machine with six controlled axes. The relative vibration between workpiece and tool is made by vibrating means 4 carried by the machining head, whereas the feed motion along the machining path and the additional relative oscillation motion are supplied to the machining tool 3 by a combined movement of the machining head 2 performed by the numeric control of the machine. In particular, the additional relative oscillation motion can be provided by using at least one of the six controlled axes of the numeric control.

## Claims

1. High-frequency machining method, comprising the step of performing a machining on a workpiece (P) by means of a machining tool (3) with a relative vibration between workpiece and tool at a vibration frequency greater than 10 kHz, and the step of providing a relative feed motion between the machining tool and the piece during machining along a machining path, **characterized by** comprising the step of providing, during machining, a relative oscillation motion between the machining tool (3) and the workpiece (P) along a penetration direction (F) of the machining tool in a workpiece thickness and with an oscillation frequency less than 10 kHz.

2. Method according to claim 1, wherein the relative vibration between the workpiece (P) and the machining tool (3) is achieved by ultrasound.

3. Method according to claim 1 or 2, wherein the machining tool (3) comprises a cutting blade and the machining comprises a cutting of the workpiece (P), said workpiece (P) comprising, in particular, a panel.

4. Method according to claim 3, wherein the machining path comprises a cutting path parallel to a flat surface of the workpiece (P).

5. Method according to any one of the preceding claims, wherein the penetration direction (F) of the machining tool (3) is transverse to a feed direction of the machining tool (3) along the machining path.

6. Method according to any one of the preceding claims, wherein the relative motion between the machining tool (3) and the workpiece (P) obtained from the combination of the feed motion and the oscillation motion defines a zigzag path and/or one or more sections of the path arranged obliquely with respect to a flat surface of the workpiece.

7. Method according to any one of the preceding claims, wherein the workpiece (P) comprises at least one flat surface being machined and the penetration direction (F) is oblique with respect to the flat surface of the workpiece (P).

8. Method according to any one of the preceding claims, wherein the machining tool (3) includes at least one machining axis and the penetration direction (F) is parallel or coaxial to the machining axis.

9. Method according to any one of the preceding claims, wherein the machining tool (3) comprises at least one machining axis and the relative vibration between the workpiece (P) and the machining tool (3) comprises a vibration of the machining tool (3) in a vibration direction that is parallel or coaxial to the machining axis of the machining tool (3).

10. Method according to any one of the preceding claims, wherein the machining tool (3) is carried by a machining head (2) of a numerically controlled machine with six controlled axes, the relative vibration between the workpiece (P) and the machining tool (3) being made by vibrating means (4) carried by the machining head (2), the feed motion and the oscillating motion being supplied to the machining tool (3) by a moving of the machining head (2) performed by the numerical control of the machine.

11. Method according to any one of the preceding claims, wherein the workpiece (P) includes an alveolar structure, in particular a honeycomb structure, for example an aluminum honeycomb structure.

12. Method according to any one of the preceding claims, wherein the oscillation frequency of the machining tool along the penetration direction (F) in the workpiece thickness is less than 1 kHz, or less than 100 Hz, or less than 10 Hz, or within a range of 0.2 Hz to 10 Hz.

13. High-frequency machining device, comprising a machining head (2) controlled by a numerical control with six machining axes, a machining tool (3) carried by the machining head, and vibrating means (4) carried by the machining head (2) and configured to induce a vibration on the tool at a vibration frequency greater than 10 kHz to perform a machining, wherein the numerical control is configured to provide the machining tool (3) with a feed motion along a machining path and simultaneously an oscillation motion along a penetration direction (F) of the machining tool (3) in a workpiece thickness and with an oscillation frequency of less than 10 kHz.

14. Device according to claim 13, wherein the vibrating means (4) comprises ultrasonic means and/or wherein the machining tool (3) comprises a cutting blade.
